# EUROPEAN PATENT SPECIFICATION

(11) **EP 1 601 937 B1**
(45) Date of publication and mention of the grant of the patent: **27.12.2006**
(21) Application number: 04714704.6
(22) Date of filing: 26.02.2004
(51) Int. Cl.: G01F 23/00

(54) **WHISTLING VENT WITH BUFFER RESERVOIR**
PFEIFAUSLASS MIT PUFFERRESERVOIR
SYSTEME D'AERATION SIFFLANT A RESERVOIR TAMPON

(30) Priority: 27.02.2003 CA 2420511; 27.02.2003 US 375240
(43) Date of publication of application: 07.12.2005
(73) Proprietor: Enviro Technology Products Ltd., South Surrey, British Columbia V4P 2J2 (CA)
(72) Inventor: HAWKINS, Murray, Bamfield, British Columbia V0R 1B0 (CA)
(74) Representative: Cummings, Sean Patrick
(86) International application number: PCT/CA2004/000269
(87) International publication number: WO 2004/076984

(56) References cited:
- GB-A- 1 054 157
- US-A- 2 617 303
- US-A- 2 716 389
- US-A- 2 751 877

## Description

### Field of the Invention

The present invention generally relates to a level indicating device for filling fluid tanks. More specifically the present invention relates to a whistling vent.

### Background of the Invention

It is well known in the art of tank filling to employ a whistling device for detecting fluid levels. Such devices have been known since 1904 as shown in United States Patent Number 753,600, issued to Maul. Whistling vents, as they are commonly referred to, typically produce a change in audible signal when a particular level of fluid is reached, most often "Full". For example, a whistle may sound while the tank is filling and become silent at the prescribed level, as described in United States Patent Number 2,617,303 issued to Mathey on November 11, 1952. Alternatively, a whistle may begin sounding when filling should stop. Often times these devices contain numerous parts, are difficult to assemble, and are expensive to manufacture.

More recently whistling vents have been incorporated into vent tubes of fuel tanks such as those typically found on boats. See for example United States Patent Number 5,832,968 issued to Leary on November 10, 1998.

One drawback of the above described systems is that no safeguard is in place if the audible signal is missed and filling continues, which can cause the tank to overflow. This could occur, for example, when noisy machinery is present or during bad weather. In these instances fuel can spill out of the tank, thus damaging the environment, creating a potential fire hazard, and causing economic wastage.

A need therefore has been identified for an improved whistling vent that can safeguard against overflow.

### Summary of the Invention

It is therefore an object of the present invention to provide an accumulating whistling vent which obviates or mitigates at least one of the disadvantages identified above.

In accordance with the present invention there is provided a whistling vent comprising: a whistle housing having first and second ends; and a whistle that generates an audible signal when gaseous fluids pass therethrough, the exhaust of said whistle extending into said whistle housing. With respect to US 2,617,303, the invention is characterised in that a mounting tube extends from each of said ends of the whistle housing; the intake of said whistle is housed within said mounting tube extending from said first end of said whistle housing; and said whistle housing is a reservoir that accumulates liquid fluids passing through said whistle. Suitably, the whistle housing reservoir is transparent or translucent.

The whistling vent of the invention preferably further comprises: a reservoir base having a mounting tube extending therefrom, wherein the intake of said whistle is housed within said mounting tube of said reservoir base and wherein the exhaust of said whistle extends into said reservoir base; and a lid having a mounting tube extending therefrom, the lid being attached to said reservoir base such that a liquid fluid seal is formed. Suitably, the reservoir base is transparent or translucent. Conveniently, the reservoir base and the lid comprise a fuel filter base and fuel filter lid.

In accordance with the present invention there is also provided a level indicating system for use in a tank having a vent line, the system comprising the whistling vent wherein said whistling vent is coupled in said vent line such that said first end is closest to said tank.

### Brief Description of the Drawings

These and other features of the invention will become more apparent from the following description in which reference is made to the appended drawings which:
**Figure 1** presents an exploded side view of an accumulating whistling vent in accordance with a preferred embodiment of the present invention;
**Figure 2** presents an assembled side view of an accumulating whistling vent in accordance with a preferred embodiment of the present invention; and
**Figure 3** presents a schematic side elevation of an accumulating whistling vent in accordance with a preferred embodiment of the present invention as incorporated into the vent line of a fuel tank.

### Detailed Description of the Preferred Embodiment

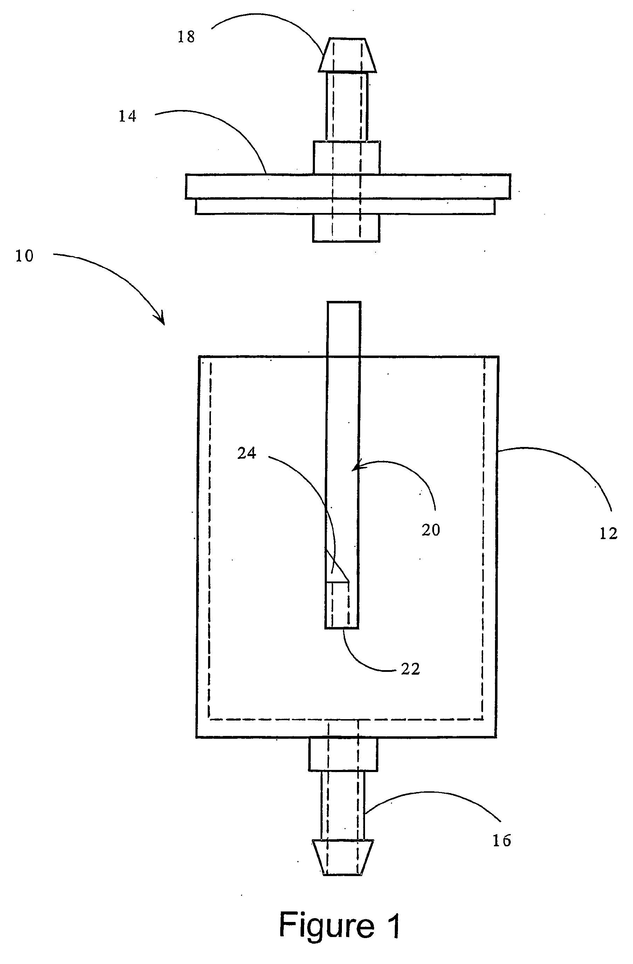

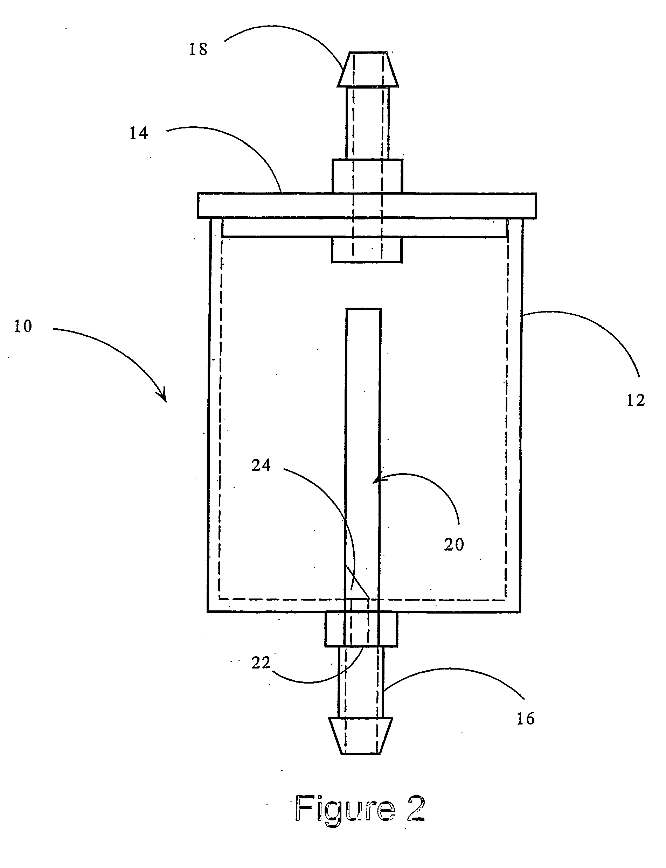

Referring to Figures 1 and 2, a side elevation of a preferred embodiment of an accumulating whistling vent is shown generally by reference number 10. Accumulating whistling vent 10 includes a reservoir base 12 and lid 14. Extending from both reservoir base 12 and lid 14 are mounting tubes 16 and 18, respectively, whose function is described below in greater detail.

In accordance with a preferred embodiment of the invention reservoir base 12, lid 14 and mounting tubes 16 and 18 include an automobile fuel filter. As will be apparent to one skilled in the art, it is not essential to the invention described in the summary that a "fuel filter" be used. Any structural component providing the functionality described below could be used in substitution thereof.

Housed in reservoir base 12 is whistle 20. More specifically, whistle intake 22 is housed in mounting tube 16 such that whistle exhaust 24 extends into reservoir base 12. In the preferred embodiment of the invention, whistle 20 is a brass key-chain whistle that has been slightly tapered to ease insertion into mounting tube 16.

As will be appreciated by one skilled in the art, a brass key chain whistle is not essential to the invention described in the summary and could be substituted with any other type of whistle capable of producing the audible signal, and accommodating the fluid flow, described below.

In the preferred embodiment of the invention lid 14 is sealed to reservoir base 12 with glue (not shown) to prevent lid 14 from becoming dislodged during a filling operation. As will be apparent to one skilled in the art, however, glue is not necessary for this purpose and could be substituted by any other sealing means known in the art including, for example, an interference fit. Alternatively, reservoir base 12 and lid 14 could be substituted with a one piece whistle housing reservoir of similar structure, said piece being formed by plastic injection moulding, for example. The only restriction imposed by a one piece construction is ensuring that whistle 20 can be inserted through mounting tube 16, or alternatively is incorporated into the whistle housing reservoir during the manufacturing process.

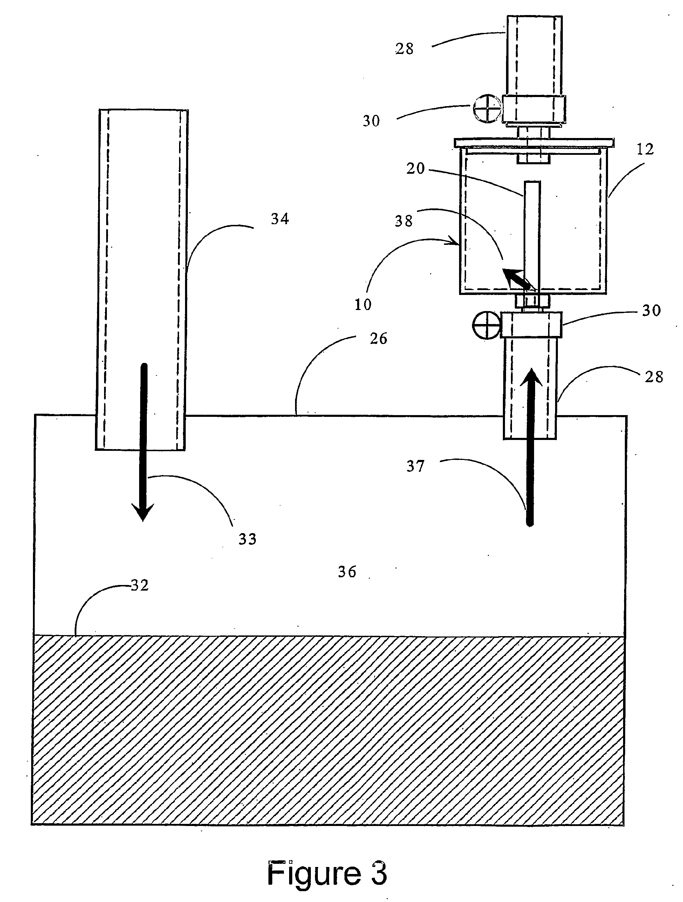

Operation of accumulating whistling vent 10 is described with reference to Figure 3, wherein tank 26 is being filled with fluid 32. Accumulating whistling vent 10 is coupled between vent line 28 of tank 26 via mounting tubes 16 and 18, and hose clamps 30. According to a preferred embodiment of the invention, accumulating whistling vent 10 is positioned near to the tank end of the vent line so as to minimize movement, and provide the earliest possible warning signal. If space is limited vent 10 could be placed further along vent line 28, but the time before overflow will be slightly reduced as a result.

When fluid 32 is introduced into tank 26 through fill line 34, air 36 within tank 26 exhausts through vent line 28, and whistle 20, as indicated by arrows 37 and 38. The sounding of whistle 20 indicates that space remains in the tank for additional liquid.

When the fluid level in tank 26 reaches its maximum, additional fluid is forced to flow through line vent 28 where it begins accumulating in reservoir base 12. As this additional liquid passes through whistle 20, the whistle is muted thus indicating a full tank.
An accumulating whistling vent as described above is beneficial for several reasons. If an operator does not hear the change in audible signal (i.e. the muting of whistle 20) due to excessive noise, reservoir base 12 prevents fluid from being immediately discharged into the environment through vent line 28. Instead, by accumulating excess fluid in reservoir base 12, whistling vent 10 provides additional time for the change in audible signal to be detected. Depending upon the flow rate of the fluid being introduced, therefore, one can extend the time between when the whistle is muted and overflow occurs, by increasing the size of reservoir base 12. The only limits being the amount of space available and the back pressure created by the accumulated fluid.

Accumulating whistling vent 10 is particularly beneficial for vehicular fuel tanks. This is because excess liquid can be stored in reservoir base 12 until such time as the fluid level in the tank drops. Thus, not only does accumulating whistling vent 10 reduce environmental waste it limits economic waste as well.

In the preferred embodiment of the invention reservoir base 12 is transparent. Thus, a visual indicator is provided in addition to the change in audible signal described above. As will be apparent to one skilled in the art, reservoir base 12 need not be transparent, but merely translucent such that fluid accumulation can be readily ascertained.

A fuel filter and brass key chain whistle are used in an embodiment of the invention to minimize manufacturing costs. As these items are readily available, no custom parts are required. Furthermore, unnecessary parts are avoided which in turn reduces possible failure modes and repair time.

## Claims

1. A whistling vent (10) comprising:
a whistle housing (12, 14) having first and second ends; and
a whistle (20) that generates an audible signal when gaseous fluids pass therethrough, the exhaust of said whistle extending into said whistle housing (12, 14);
**characterised in that** a mounting tube (16, 18) extends from each of said ends of the whistle housing (12, 14);
the intake of said whistle (20) is housed within said mounting tube (16) extending from said first end of said whistle housing (12, 14); and
said whistle housing (12, 24) is a reservoir that accumulates liquid fluids passing through said whistle (20).

2. A whistling vent (10) as claimed in claim 1 wherein said whistle housing reservoir (12, 14) is transparent or translucent.

3. A whistling vent (10) as claimed in claim 1 comprising:
a reservoir base (12) having a mounting tube (16) extending therefrom, wherein the intake of said whistle (20) is housed within said mounting tube of said reservoir base and wherein the exhaust of said whistle extends into said reservoir base; and
a lid (14) having a mounting tube (18) extending therefrom, the lid being attached to said reservoir base such that a liquid fluid seal is formed.

4. A whistling vent (10) as claimed in claim 3 wherein said reservoir base (12) is transparent or translucent.

5. A whistling vent (10) as claimed in claim 3 wherein said reservoir base (12) and lid (14) include a fuel filter base and fuel filter lid.

6. A level indicating system for use in a tank (26) having a vent line (28), the system comprising a whistling vent (10) as claimed in any preceding claim, wherein said whistling vent is coupled in said vent line such that said first end is closest to said tank.

## Patentansprüche

1. Pfeifgeräusche verursachende Belüftungsvorrichtung (10), umfassend:
ein Pfeifengehäuse (12, 14) mit einem ersten und einem zweiten Ende; und eine Pfeife (20), die ein hörbares Signal erzeugt, wenn gasförmige Fluide durch sie hindurchtreten, wobei sich der Auslass der Pfeife in das Pfeifengehäuse (12, 14) hinein erstreckt;
**dadurch gekennzeichnet, dass** sich ein Einbaurohr (16, 18) ausgehend von jedem der genannten Enden des Pfeifengehäuses (12, 14) erstreckt;
dass der Einlass der Pfeife (20) innerhalb des genannten Einbaurohrs (16), das sich ausgehend von dem ersten Ende des Pfeifengehäuses (12, 14) erstreckt, untergebracht ist; und
dass das Pfeifengehäuse (12, 24) ein Speicherbehälter ist, der durch die Pfeife (20) hindurchtretende flüssige Fluide akkumuliert.

2. Pfeifgeräusche verursachende Belüftungsvorrichtung (10) wie in Anspruch 1 beansprucht, worin der Speicherbehälter des Pfeifengehäuses (12, 14) lichtdurchlässig oder durchscheinend ist.

3. Pfeifgeräusche verursachende Belüftungsvorrichtung (10) wie in Anspruch 1 beansprucht, umfassend:
ein Speicherbehälter-Unterteil (12) mit einem Einbaurohr (16), das sich ausgehend davon erstreckt, wobei der Einlass der Pfeife (20) innerhalb dieses Einbaurohrs des Speicherbehälter-Unterteils untergebracht ist und wobei der Auslass der Pfeife sich in das Speicherbehälter-Unterteil hinein erstreckt;
und ein Deckelteil (14) mit einem Einbaurohr (18), das sich ausgehend davon erstreckt, wobei das Deckelteil an dem Speicherbehälter-Unterteil so befestigt ist, dass eine flüssigkeitsdichte Abdichtung entstanden ist.

4. Pfeifgeräusche verursachende Belüftungsvorrichtung (10) wie in Anspruch 3 beansprucht, worin das Speicherbehälter-Unterteil (12) lichtdurchlässig oder durchscheinend ist.

5. Pfeifgeräusche verursachende Belüftungsvorrichtung (10) wie in Anspruch 3 beansprucht, worin das Speicherbehälter-Unterteil (12) und das Deckelteil (14) ein Kraftstofffilter-Unterteil und ein Kraftstofffilter-Deckelteil umfassen.

6. Höhen- oder Füllgrad-Anzeigesystem zur Verwendung in einem Tank (26) mit einer Entlüftungsleitung (28), wobei das System eine Pfeifgeräusche verursachende Belüftungsvorrichtung (10) wie in einem der voranstehenden Ansprüche beansprucht aufweist, worin die die Pfeifgeräusche verursachende Belüftungsvorrichtung so in die Entlüftungsleitung eingebaut ist, dass ihr genanntes erstes Ende dem Tank am nächsten ist.

## Revendications

1. Event siffleur (10) comprenant :
un logement de sifflet (12, 14) ayant des première et seconde extrémités ; et
un sifflet (20) qui génère un signal audible quand des fluides gazeux passent à travers celui-ci, l'échappement dudit sifflet s'étendant dans ledit logement de sifflet (12, 14) ;
**caractérisé en ce qu'**un tube de montage (16, 18) s'étend depuis chacune desdites extrémités du logement de sifflet (12, 14) ;
l'aspiration dudit sifflet (20) est logée dans ledit tube de montage (16) s'étendant depuis ladite première extrémité dudit logement de sifflet (12, 14) ; et
ledit logement de sifflet (12, 14) est un réservoir qui accumule des fluides liquides passant à travers ledit sifflet (20).

2. Event siffleur (10) selon la revendication 1 dans lequel ledit réservoir de logement de sifflet (12, 14) est transparent ou translucide.

3. Event siffleur (10) selon la revendication 1 comprenant :
une base de réservoir (12) ayant un tube de montage (16) s'étendant à partir de celle-ci, dans lequel l'aspiration dudit sifflet (20) est logée à l'intérieur dudit tube de montage de ladite base de réservoir et dans lequel l'échappement dudit sifflet s'étend dans ladite base de réservoir ; et
un couvercle (14) ayant un tube de montage (18) s'étendant à partir de celui-ci, le couvercle étant fixé à ladite base de réservoir de sorte qu'une étanchéité aux fluides liquides soit formée.

4. Event siffleur (10) selon la revendication 3 dans lequel ladite base de réservoir (12) est transparente ou translucide.

5. Event siffleur (10) selon la revendication 3 dans lequel ladite base de réservoir (12) et le couvercle (14) comprennent une base de filtre à carburant et un couvercle de filtre à carburant.

6. Système d'indication de niveau destiné à être utilisé dans un réservoir (26) comprenant une conduite d'air (28), le système comprenant un évent siffleur (10) selon l'une quelconque des revendications précédentes, dans lequel ledit évent siffleur est couplé dans ladite conduite d'air de sorte que ladite première extrémité soit la plus proche dudit réservoir.
